# EUROPÄISCHE PATENTSCHRIFT

(11) **EP 3 800 454 B1**
(45) Veröffentlichungstag und Bekanntmachung des Hinweises auf die Patenterteilung: **09.03.2022**
(21) Anmeldenummer: 20193951.9
(22) Anmeldetag: 01.09.2020
(51) Int. Cl.: G01K 13/02, G01K 7/42, G01L 19/00

(54) **ERFASSUNGSSYSTEM FÜR EINE FLUIDLEITUNG, FLUIDLEITUNGSSYSTEM UND KLIMAANLAGE**
DETECTION SYSTEM FOR A FLUID LINE, FLUID LINE SYSTEM AND AIR CONDITIONING SYSTEM
SYSTÈME DE DÉTECTION POUR UNE CONDUITE DE FLUIDE, SYSTÈME DE CONDUITE DE FLUIDE ET CLIMATISEUR

(30) Priorität: 01.10.2019 DE 102019215100
(43) Veröffentlichungstag der Anmeldung: 07.04.2021
(73) Patentinhaber: ContiTech Techno-Chemie GmbH, 61184 Karben (DE)
(72) Erfinder: Zhang, Hong, Dr., 30419 Hannover (DE)
(74) Vertreter: Continental Corporation

(56) Entgegenhaltungen:
- EP-A1- 3 124 937
- EP-A1- 3 364 167
- DE-A1- 19 951 802
- US-A- 4 607 530
- W. Schumacher ET AL: "Grundlagen der Regelungstechnik", , 25. Juni 2004 (2004-06-25), Seiten 1-312, XP055696753, Braunschweig Gefunden im Internet: URL:https://www.fzt.haw-hamburg.de/pers/Sc holz/materialFM2/Skript_GdR.pdf [gefunden am 2020-05-19]

## Beschreibung

Die Erfindung betrifft ein Erfassungssystem für eine Fluidleitung, ein Fluidleitungssystem mit einem derartigen Erfassungssystem und eine Klimaanlage. Erfassungssysteme sind grundsätzlich aus dem Stand der Technik bekannt. Diese dienen zum Erfassen einer physikalischen Größe, wie beispielsweise einer Temperatur oder einem Druck in einer Fluidleitung. So sind beispielsweise Erfassungssysteme mit einem Drucksensor bekannt, der derart an einer Fluidleitung befestigt werden kann, um den Druck innerhalb der Fluidleitung und somit auch den Druck des von der Fluidleitung geförderten Fluids zu erfassen. Außerdem sind Temperatursensoren bekannt, die an der Fluidleitung befestigt werden können, um eine Temperatur des von der Fluidleitung geförderten Fluids zu erfassen. Um eine möglichst genaue und schnelle Erfassung des Drucks und der Temperatur zu gewährleisten, ist es in der Praxis vorgesehen, dass der Drucksensor und der Temperatursensor in unmittelbaren Kontakt zu dem Fluid aus der Fluidleitung kommen. Dazu können der Temperatursensor und der Drucksensor durch eine Öffnung in die Fluidleitung hineinfassen, um dort den Druck und die Temperatur des von der Fluidleitung geförderten Fluids zu erfassen. Andere Ausgestaltungen sind ebenfalls bekannt. So kann das Erfassungssystem eine Stegleitung aufweisen, die von einer mantelseitigen Öffnung der Fluidleitung in Radialrichtung wegführt, sodass Fluid aus der Fluidleitung durch die Stegleitung zu dem Drucksensor und dem Temperatursensor vordringen kann. Außerdem sind Fluidleitungssysteme bekannt, die eine Fluidleitung aufweisen, an der ein Erfassungssystem gemäß der vorangegangen Erläuterung befestigt ist. Schließlich sind auch Klimaanlagen bekannt.

Die bekannten Ausgestaltungen von Erfassungssystemen, die zur Erfassung der Temperatur und des Drucks von einem Fluid in einer Fluidleitung ausgebildet sind, haben zumeist den Nachteil, dass die Verwendung des Drucksensors und des Temperatursensors, die jeweils in unmittelbaren Kontakt mit dem Fluid der Fluidleitung kommen, sehr teuer sind und in der Konstruktion des Erfassungssystems sehr aufwändig sind. Außerdem entstehen durch diese Konstruktionsmaßnahmen hohe Kosten, die zu vermeiden sind.

Bei Fluidleitungssystemen und/oder bei Klimaanlage besteht jedoch der bedarf, sowohl den Druck als auch die Temperatur möglichst genau und schnell zu erfassen, um Bauteile des Fluidleitungssystems bzw. der Klimaanlage von einem zu hohen Druck des Fluids und/oder einer zu hohen Temperatur des Fluids schützen zu können.

Die EP 3 364 167 A1 beschreibt eine Sensorvorrichtung, die eine Temperatur eines Erfassungsziels genau berechnet und eine Form eines Gehäuses vereinfacht. Die Sensorvorrichtung umfasst einen Drucksensor, einen ersten Temperatursensor, der eine von einem Erfassungsziel geleitete Temperatur erfasst, einen zweiten Temperatursensor, der an einer Position vorgesehen ist, die von dem Erfassungsziel weiter entfernt ist als der erste Temperatursensor, und einen Temperaturrechner, der eine Temperatur des Erfassungsziels aus einer erfassten Temperatur des ersten Temperatursensors und einer erfassten Temperatur des zweiten Temperatursensors berechnet.

Der Erfindung liegt deshalb die Aufgabe zugrunde, ein Erfassungssystem mit einem Drucksensor zur Erfassung eines Drucks in einer Fluidleitung bereitzustellen, wobei das Erfassungssystem außerdem zur schnellen, einfachen und zugleich kostengünstigen Ermittlung der Temperatur des Fluids ausgebildet ist. Die Aufgabe besteht weiterhin darin, das Erfassungssystem auch derart zu gestalten, dass es für ein Fluidleitungssystem und/oder eine Klimaanlage geeignet ist.

Gelöst wird die Aufgabe gemäß einem ersten Aspekt der Erfindung durch ein Erfassungssystem mit den Merkmalen des Anspruchs 1. Vorgesehen ist also ein Erfassungssystem für eine Fluidleitung. Das Erfassungssystem weist eine Sensoreinheit, eine Auswerteeinheit und eine Signalschnittstelle auf. Die Sensoreinheit weist einen Drucksensor und einen Temperatursensor auf. Die Sensoreinheit ist ausgebildet, um an der Fluidleitung befestigt zu werden. Der Drucksensor ist derart an oder in der Sensoreinheit angeordnet, sodass ein Fluid aus der Fluidleitung direkt auf den Drucksensor wirkt, wenn die Sensoreinheit an der Fluidleitung befestigt ist. Der Temperatursensor ist in der Sensoreinheit derart angeordnet, sodass der Temperatursensor keinen direkten Kontakt mit dem Fluid aus der Fluidleitung hat, wenn die Sensoreinheit an der Fluidleitung befestigt ist. Der Temperatursensor ist zur Erzeugung eines Temperaturmesssignals ausgebildet, das eine von dem Temperatursensor erfasste Messtemperatur repräsentiert. Der Temperatursensor ist direkt oder indirekt mit der Auswerteeinheit gekoppelt, um das Temperaturmesssignal an die Auswerteeinheit zu übertragen. Der Drucksensor ist zur Erzeugung eines Drucksignals ausgebildet, das einen von dem Drucksensor erfassten Fluiddruck des Fluids repräsentiert. Außerdem ist der Drucksensor direkt oder indirekt mit der Auswerteeinheit gekoppelt, um das Drucksignal an die Auswerteeinheit zu übertragen. Von der Auswerteeinheit ist eine Übertragungsfunktion gespeichert, die eine funktionale Beziehung zwischen einer Temperatur am Temperatursensor und der Temperatur des Fluids repräsentiert. Die Auswerteeinheit ist konfiguriert, eine Schrittgruppe mit zumindest den folgenden Schritten a) bis e) wiederholt auszuführen:
a) Ermitteln einer Basistemperatur als eine Schätzung für die Temperatur des Fluid basierend auf dem Fluiddruck;
b) Ermitteln einer Fluidtemperatur basierend auf der Basistemperatur und einem Korrekturwert, der allein bei der ersten Ausführung der Schrittgruppe einen vorbestimmten Wert aufweist und bei jeder weiteren Ausführung der Schrittgruppe von einem zuletzt aktualisierten Korrekturwert bestimmt ist;
c) Ermitteln einer Sensortemperatur als eine Schätzung für die Temperatur am Temperatursensor mittels der Übertragungsfunktion und der Fluidtemperatur als Eingangsgröße für die Übertragungsfunktion;
d) Ermitteln einer Temperaturdifferenz zwischen der Messtemperatur und der Sensortemperatur; und
e) Aktualisieren des Korrekturwerts als aktualisierter Korrekturwert für die nachfolgende Schrittgruppe basierend auf der aktuellen Temperaturdifferenz oder einem Mittelwert von mehreren Temperaturdifferenzen, die in Schritt d) der aktuellen Schrittgruppe und mindestens einer vorangegangenen Schrittgruppe ermittelt worden sind.

Außerdem ist das Erfassungssystem ausgebildet, ein Auswertesignal zu erzeugen und über die Signalschnittstelle zu übertragen, das die jeweils zuletzt in Schritt e) ermittelte Fluidtemperatur repräsentiert.

Der Erfindung liegt die Erkenntnis zugrunde, dass der in der Sensoreinheit angeordnete Temperatursensor eine Temperatur zwar sehr präzise messen kann, jedoch dass die von dem Temperatursensor erfasste Temperatur gegenüber der tatsächlichen Temperatur des Fluids zeitverzögert ist. Um ein Fluidleitungssystem und/oder eine Klimaanlage vor einer zu hohen Temperatur des von dem Fluidleitungssystem bzw. der Klimaanlage geförderten Fluids zu schützen, hat es sich in der Praxis gezeigt, dass die vom Temperatursensor erfasste Messtemperatur aufgrund der zugehörigen Zeitverzögerung nicht geeignet ist, um ein ausreichend schnelles Eingreifen in das Fluidleitungssystem bzw. die Klimaanlage zu erlauben und damit das Fluidleitungssystem bzw. die Klimaanlage vor einer zu hohen Temperatur des Fluids zu schützen. In der Vergangenheit wurde deshalb ein weiterer Sensor verwendet, der in unmittelbarem Kontakt mit dem Fluid steht. Diese konstruktiven Zusatzmaßnahmen und die damit verursachten Kosten sollen jedoch vermieden werden. Der Erfindung liegt der Gedanke zugrunde, die Messtemperatur des Temperatursensors zu verwenden, auch wenn der Temperatursensor keinen direkten Kontakt zu dem Fluid in der Fluidleitung hat. Das Erfassungssystem weist jedoch auch den Drucksensor auf. Der Drucksensor ist in direktem Kontakt mit dem Fluid aus der Fluidleitung, wenn die Sensoreinheit an der Fluidleitung befestigt ist. In der Praxis konnte festgestellt werden, dass basierend auf dem Fluiddruck eine Basistemperatur für das Fluid abgeschätzt werden kann. Es ist deshalb vorgesehen, dass die Auswerteeinheit konfiguriert ist, in Schritt a) die entsprechende Basistemperatur zu ermitteln. Da der Fluiddruck mittels des Drucksensors mit einer allenfalls sehr kleinen Zeitverzögerung erfasst wird, gilt entsprechendes für die Basistemperatur. Somit kann die Basistemperatur eine Schätzung für die Temperatur des Fluids mit einer allenfalls sehr kleinen Zeitverzögerung repräsentieren.

Darüber hinaus liegt der Erfindung der Gedanke zugrunde, dass die mit der allenfalls sehr kleinen Zeitverzögerung ermittelbare Basistemperatur für die Temperatur des Fluids verwendet werden kann, um mit Hilfe eines Korrekturwerts eine weitere und genauere Abschätzung für die Temperatur des Fluids besonders schnell zu ermöglichen. Es ist deshalb vorgesehen, dass die Auswerteeinheit konfiguriert ist, basierend auf der Basistemperatur und einen Korrekturwert eine Fluidtemperatur zu ermitteln, die eine verbesserte Schätzung für die Temperatur des Fluids ist. Schritt b) kann von der Auswerteeinheit unmittelbar nach Schritt a) ausgeführt werden. Deshalb entsteht an dieser Stelle auch allenfalls eine sehr kleine Zeitverzögerung. Deshalb kann die Fluidtemperatur ebenfalls eine verbesserte Abschätzung für die Temperatur des Fluids mit einer allenfalls sehr kleinen Zeitverzögerung repräsentieren. Wenn der Schritt b) erstmalig ausgeführt wird, hat der Korrekturwert einen vorbestimmten Wert.

Um zu dem Korrekturwert für die Ausführung der weiteren Schrittgruppen zu gelangen, weist jede Schrittgruppe die von der Auswerteeinheit ausführbaren Schritte c) bis e) auf. Diesen Schritten liegt der Gedanke zugrunde, dass ausgehend von der in Schritt b) ermittelten Fluidtemperatur abgeschätzt werden soll, welche zeitverzögerte Temperatur an dem Temperatursensor, der innerhalb der Sensoreinheit angeordnet ist, erfasst werden müsste, wenn die Fluidtemperatur tatsächlich die exakte Temperatur des Fluids ist. Die Auswerteeinheit ist deshalb konfiguriert, Schritt c) auszuführen. Mit anderen Worten ist die Auswerteeinheit konfiguriert, eine Sensortemperatur als eine Schätzung für die Temperatur am Temperatursensor mittels der Übertragungsfunktion und der in Schritt b) ermittelten Fluidtemperatur als Eingangsgröße für die Übertragungsfunktion zu ermitteln. Diese Sensortemperatur sollte im Idealfall mit der von dem Temperatursensor tatsächlich gemessen Messtemperatur übereinstimmen. Ob dies der Fall ist, wird in Schritt d) überprüft.

Die Auswerteeinheit ist konfiguriert, in Schritt d) eine Temperaturdifferenz zwischen der tatsächlich von dem Temperatursensor gemessenen Messtemperatur und der in Schritt c) ermittelten Sensortemperatur zu ermitteln. Diese Temperaturdifferenz gibt vereinfach betrachtet an, ob die in Schritt b) ermittelte Fluidtemperatur eine genaue Abschätzung für die Temperatur des Fluids repräsentiert oder nicht. Ist die Temperaturdifferenz null, so kann daraus geschlossen werden, dass die in Schritt b) ermittelte Fluidtemperatur sehr präzise ist. Ist die Temperaturdifferenz hingegen nicht null, sondern größer, insbesondere größer als 5°C, so kann dies auf eine nicht besonders gute Abschätzung der Temperatur des Fluids durch die in Schritt b) ermittelte Fluidtemperatur sein. Insbesondere im letzten Fall bedarf es deshalb einer Anpassung des Korrekturwerts für Schritt b).

Es ist deshalb vorgesehen, dass die Auswerteeinheit konfiguriert ist, Schritt e) auszuführen. Danach ist ein Aktualisieren des Korrekturwerts als aktualisierter Korrekturwert für die nachfolgende Schrittgruppe basierend auf der aktuellen Temperaturdifferenz oder einen Mittelwert von mehreren Temperaturdifferenzen, die in Schritt d) der aktuellen Schrittgruppe und mindestens einer vorangegangenen Schrittgruppe ermittelt worden sind, vorgesehen. Somit kann die in Schritt d) zuletzt ermittelte Temperaturdifferenz und/oder diese sowie weitere, zuvor ermittelte Temperaturdifferenzen berücksichtigt werden, um die Aktualisierung des Korrekturwerts auszuführen. Dieser Korrekturwert wird als aktualisierter Korrekturwert bezeichnet und dient als solcher bei der Ausführung der nachfolgenden Schrittgruppe in dem zugehörigen Schritt b) zur Korrektur der Basistemperatur, um basierend auf der Basistemperatur und dem aktualisierten Korrekturwert auf die Fluidtemperatur zu schließen. Durch den aktualisierten Korrekturwert wird in Schritt b) deshalb eine Fluidtemperatur ermittelt, die eine bessere Abschätzung der Temperatur des Fluids repräsentiert. Darüber hinaus kann, wie zuvor erläutert, diese Fluidtemperatur mit einer allenfalls sehr kleinen Zeitverzögerung gegenüber der tatsächlichen Temperatur des Fluids ermittelt werden. Zusammenfassend ergeben sich dadurch zumindest zwei Vorteile. Einerseits kann die in Schritt b) ermittelte Fluidtemperatur besonders schnell ermittelt werden, sodass die Fluidtemperatur eine allenfalls kleine Zeitverzögerung gegenüber der tatsächlichen Temperatur des Fluids aufweist. Andererseits ist die Fluidtemperatur auch eine sehr genaue Schätzung für die tatsächliche Temperatur des Fluids. Denn die Fluidtemperatur wird mit jeder ausführenden Schrittgruppe verbessert. Im Ergebnis kann die Fluidtemperatur und der von dem Drucksensor erfasste Fluiddruck verwendet werden, um beispielsweise ein Fluidleitungssystem und/oder eine Klimaanlage vor einer zu hohen Temperatur und/oder einem zu hohen Druck zu schützen. Um zumindest die Fluidtemperatur zur Verfügung zu stellen, ist das Erfassungssystem ausgebildet, ein Ausgangssignal zu erzeugen und über die Signalschnittstelle des Erfassungssystems zu übertragen, das die jeweils zuletzt in Schritt b) ermittelte Fluidtemperatur repräsentiert. Das Ausgangssignal kann auch den jeweils zuletzt ermittelten Fluiddruck repräsentieren. Das Ausgangssignal kann somit innerhalb eines Fluidleitungssystems und/oder einer Klimaanlage zum Schutz vor zu hohem Druck und/oder einer zu hohen Temperatur verwendet werden. Das Erfassungssystem kann ausgebildet sein, das Ausgangssignal zu senden. Es ist jedoch auch möglich, dass das Erfassungssystem über die Signalschnittstelle zum Empfang eines Abrufsignals ausgebildet ist, und als Antwort auf das Abrufsignal das Ausgangssignal an den entsprechenden Sender des Abrufsignals zurücksendet.

Eine vorteilhafte Ausgestaltung des Erfassungssystems zeichnet sich dadurch aus, dass die Übertragungsfunktion ein Zeitverzögerungsglied, insbesondere ein Zeitverzögerungsglied erster Ordnung mit einer vorbestimmten Zeitkonstante, repräsentiert. Als Eingangsgröße für die Übertragungsfunktion dient eine Temperatur des Fluids. Ausgangsgröße der Übertragungsfunktion ist eine Temperatur am Temperatursensor, der in der Sensoreinheit angeordnet ist. Die Temperatur des Fluids kann nämlich nur zeitverzögert von dem Temperatursensor erfasst werden. Dies ist auf den fehlenden Kontakt des Temperatursensors zu dem Fluid zurückzuführen. So kann der Temperatursensor beispielsweise auf einer Platine innerhalb der Sensoreinheit angeordnet sein, wobei die Platine keinen unmittelbaren Kontakt zum Fluid hat. Es kann jedoch auch vorgesehen sein, dass der Temperatursensor in einem Abschnitt der Platine angeordnet ist, die keinen direkten Kontakt zu dem Fluid hat. Ein Luftspalt und/oder die Platine bilden somit einen thermischen Widerstand, der allenfalls eine zeitverzögerte Erfassung der Temperatur des Fluids mit dem Temperatursensor erlaubt. Durch den genannten thermischen Widerstand wird beispielsweise eine Zeitverzögerung verursacht. Deshalb kann auch eine Übertragungsfunktion vorgesehen sein, die gemäß einem Zeitverzögerungsglied, insbesondere einem Zeitverzögerungsglied erster Ordnung, ausgebildet ist, und die außerdem die Übertragung einer Temperatur des Fluids zu einer Temperatur am Temperatursensor mathematisch repräsentiert.

Die Auswerteeinheit ist konfiguriert, die Übertragungsfunktion in Schritt c) auszuführen, und zwar mit der in Schritt b) ermittelten Fluidtemperatur als Eingangsgröße. Die Fluidtemperatur bildet eine Schätzung für die Temperatur des Fluids. Somit kann sie auch als eine geeignete Eingangsgröße für die Übertragungsfunktion verwendet werden. Als Ausgangsgröße der Übertragungsfunktion wird beim Ausführen der Übertragungsfunktion eine Temperatur am Temperatursensor ermittelt. Dies erfolgt in Schritt c). Die ermittelte Temperatur wird hierbei als die Sensortemperatur bezeichnet und ist eine Schätzung für die Temperatur am Temperatursensor. Dass die Sensortemperatur als eine Schätzung aufgefasst wird, resultiert von der Eingangsgröße, nämlich der Fluidtemperatur, die ebenfalls eine Schätzung für die Temperatur des Fluids ist. In einer vorteilhaften Ausgestaltung kann die Übertragungsfunktion als ein Zeitverzögerungsglied erster Ordnung ausgebildet sein. Dieses Zeitverzögerungsglied wird auch als PTi-Glied bezeichnet. Die zugehörige Zeitkonstante kann vorbestimmt sein.

Eine vorteilhafte Ausgestaltung des Erfassungssystems zeichnet sich dadurch aus, dass die Zeitkonstante eine Zeit zwischen 10 Sekunden und 40 Sekunden ist. So kann die Zeitkonstante beispielsweise 20 Sekunden sein. Sowohl der zuvor genannt Zeitbereich als auch die beispielhaft genannte Zeit sind nicht einschränkend zu verstehen. Vielmehr kommt es oftmals auf die konkreten, praktisch vorliegenden Konstruktionsmerkmale an, um einen Wert für die Zeitkonstante zu bestimmen.

Eine weitere vorteilhafte Ausgestaltung des Erfassungssystems zeichnet sich dadurch aus, dass die Auswerteeinheit konfiguriert ist, die Zeitkonstante basierend auf dem erfassten Fluiddruck, der Basistemperatur oder der Fluidtemperatur zu ermitteln. So kann beispielsweise der Fluiddruck oder die Basistemperatur von der Auswerteeinheit verwendet werden, um basierend hierauf eine Zeitkonstante durch Abschätzung vorzubestimmen. Von der Auswerteeinheit kann dazu eine Abschätzfunktion gespeichert sein, die als Eingangsgröße den Fluiddruck, die Basistemperatur oder die Fluidtemperatur hat. Mittels dieser Abschätzfunktion kann als Ausgangswert die Zeitkonstante ermittelt werden. Die Auswerteeinheit kann zum Ausführen der Abschätzfunktion ausgebildet sein. Zusammenfassend kann somit die Auswerteeinheit konfiguriert sein, die Zeitkonstante durch Ausführen der Abschätzfunktion mit dem Fluiddruck, der Basistemperatur oder der Fluidtemperatur als Eingangsgröße zu ermitteln.

Eine weitere vorteilhafte Ausgestaltung des Erfassungssystems zeichnet sich dadurch aus, dass die Auswerteeinheit konfiguriert ist, die Zeitkonstante basierend auf dem erfassten Fluiddruck, der Basistemperatur oder der Fluidtemperatur aus einer ersten Referenztabelle auszulesen, die von der Auswerteeinheit gespeichert ist. Die erste Referenztabelle kann vorbestimmt sein. Somit kann die Zeitkonstante beispielsweise unmittelbar nach dem Ausführen von Schritt a) ermittelt werden. Denn in Schritt a) wird zunächst die Basistemperatur ermittelt. Basierend auf dieser Basistemperatur kann die Auswerteeinheit den entsprechenden Eintrag in der ersten Referenztabelle auffinden und den zugehörigen Wert für die Zeitkonstante auslesen. Diese Zeitkonstante kann sodann in Schritt c) verwendet werden. Die vorangegangenen Erläuterungen können in analoger Weise für den Fluiddruck und die Fluidtemperatur gelten. Die Zeitkonstante kann bei jeder Ausführung der Schrittgruppe a) bis e) erneut ermittelt werden. Es ist jedoch auch möglich, dass die Zeitkonstante nur beim erstmaligen Ausführen der Schrittgruppe ermittelt wird. Für beide zuvor genannten Alternativen kann eine entsprechende Konfiguration der Auswerteeinheit vorgesehen sein.

Eine weitere vorteilhafte Ausgestaltung des Erfassungssystems zeichnet sich dadurch aus, dass die Auswerteeinheit konfiguriert ist, die Basistemperatur in Schritt a) jeweils durch Multiplikation des Werts des Fluiddrucks mit einem vorbestimmten Umrechnungsfaktor oder mittels einer Umrechnungsfunktion, bei der der jeweilige Fluiddruck als Variable berücksichtigt ist, zu ermitteln. Der Umrechnungsfaktor kann beispielsweise durch vorherige Tests basierend auf Messungen des Fluiddrucks und Messungen der tatsächlichen Fluidtemperatur bestimmt sein. Daraus lässt sich beispielsweise ein Umrechnungsfaktor ableiten. Es ist jedoch auch möglich, dass aus einer Vielzahl von Messungen eine Umrechnungsfunktion abgeleitet wird, die eine funktionale Beziehung zwischen der Basistemperatur und dem Fluiddruck repräsentiert. Der Fluiddruck kann dabei als Eingangsgröße und/oder als Variable für die Umrechnungsfunktion berücksichtigt werden. Als Ausgangsgröße kann die Umrechnungsfunktion die Basistemperatur ausgeben. Durch die Verwendung des Umrechnungsfaktors kann die Basistemperatur in Schritt a) zumindest im Wesentlichen ohne Zeitverzögerung aus dem ebenfalls besonders schnell erfassbaren Fluiddruck ermittelt werden.

Eine weitere vorteilhafte Ausgestaltung des Erfassungssystems zeichnet sich dadurch aus, dass die Auswerteeinheit konfiguriert ist, die Basistemperatur in Schritt a) mittels einer zweiten Referenztabelle und basierend auf dem erfassten Fluiddruck zu ermitteln, wobei die zweite Referenztabelle eine Vielzahl von Basistemperaturen für zugeordnete Fluiddrücke abbildet, und wobei die zweite Referenztabelle von der Auswerteeinheit gespeichert ist. Vorzugsweise ist die Auswerteeinheit konfiguriert, bei jedem Ausführen der Schrittgruppe den jeweils aktuellsten von dem Drucksensor erfassten Fluiddruck für die Ermittlung der Basistemperatur in Schritt a) zu berücksichtigen. Außerdem ist die Auswerteeinheit vorzugsweise dazu konfiguriert, in der zweiten Referenztabelle den Eintrag eines Fluiddrucks aufzufinden, der dem erfassten Fluiddruck am nächsten kommt. Ist dieser Eintrag dessen Fluiddrucks festgestellt, kann die Auswerteeinheit außerdem dazu konfiguriert sein, die zu dem Eintrag des Fluiddrucks zugeordnete Basistemperatur auszulesen und diese als die in Schritt a) zu ermittelnde Basistemperatur zu bestimmen. Damit lässt sich die Basistemperatur in Schritt a) zumindest im Wesentlichen ohne eine Zeitverzögerung basierend auf dem Fluiddruck von der Auswerteeinheit ermitteln.

Eine weitere vorteilhafte Ausgestaltung des Erfassungssystems zeichnet sich dadurch aus, dass die Auswerteeinheit konfiguriert ist, den aktualisierten Korrekturwert in Schritt e) durch Addition des alten Korrekturwerts, der in Schritt e) der vorangegangenen Schrittgruppe ermittelt wurde, mit der gewichteten Temperaturdifferenz zu ermitteln. Die gewichtete Temperaturdifferenz ist dabei die mit einem Gewichtungsfaktor multiplizierte Temperaturdifferenz, die in Schritt d) der aktuellen Schrittgruppe ermittelt wurde. Der Gewichtungsfaktor kann vorbestimmt sein. So kann der Gewichtungsfaktor beispielsweise 0,25 sein oder kleiner als 0,25 sein. Durch den entsprechend kleinen Gewichtungsfaktor kann gewährleistet werden, dass eine robuste und nicht zu sensible Anpassung des Korrekturwerts und somit der entsprechenden Korrektur der Basistemperatur zu der Fluidtemperatur erfolgt. In Schritt e) wird somit der Korrekturwert ermittelt, der für die nächste Ausführung des Schritts b) in der folgenden Schrittgruppe berücksichtigt wird. Dadurch kann eine iterative Verbesserung der Abschätzung der Fluidtemperatur erreicht werden.

Eine weitere vorteilhafte Ausgestaltung des Erfassungssystems zeichnet sich dadurch aus, dass die Auswerteeinheit konfiguriert ist, die Fluidtemperatur in Schritt b) durch Multiplikation der Basistemperatur mit dem Korrekturwert zu ermitteln. Beim erstmaligen Ausführen des Schritts b) kann der Korrekturwert einen vorbestimmten Wert, insbesondere den Wert Eins, haben. Bei jedem weiteren Ausführen des Schritts b) kann der Korrekturwert aus dem vorangegangenen Schritt e) entnommen werden. Durch die Multiplikation der Basistemperatur mit dem Korrekturwert zur Ermittlung der Fluidtemperatur kann die Fluidtemperatur in Schritt b) besonders schnell und damit auch zumindest im Wesentlichen ohne Zeitverzögerung aus der Basistemperatur ermittelt werden. Damit kann die Fluidtemperatur besonders schnell zur Verfügung gestellt werden. Diese ermittelte Fluidtemperatur eignet sich deshalb auch zur Verwendung in einem Fluidleitungssystem oder einer Klimaanlage, um basierend auf der Fluidtemperatur eine Überhitzung und/oder einen Überdruck zu verhindern.

Eine weitere vorteilhafte Ausgestaltung des Erfassungssystems zeichnet sich dadurch aus, dass die Auswerteeinheit konfiguriert ist, die Fluidtemperatur in Schritt b) durch Addition des Korrekturwerts zu der Eine weitere vorteilhafte Ausgestaltung des Erfassungssystems zeichnet sich dadurch aus, dass die Auswerteeinheit konfiguriert ist, die Fluidtemperatur in Schritt b) durch zu ermitteln. Diese Ausgestaltung des Erfassungssystems kann alternativ zu den vorangegangenen Ausgestaltungen des Erfassungssystems verstanden werden. Der Initialwert des Korrekturwerts beim erstmaligen Ausführen des Schritts b) kann null sein. Bei jeder weiteren Ausführung des Schritts b) kann der Korrekturwert der in dem vorangegangenen Schritt e) aktualisierte Korrekturwert sein. Durch die Konfiguration der Auswerteeinheit, die die Fluidtemperatur durch Addition der Basistemperatur mit dem Korrekturwert ermittelt, kann die Fluidtemperatur besonders schnell und somit im Wesentlichen ohne Zeitverzögerung basierend auf der ermittelten Basistemperatur berechnen. Damit kann ebenfalls gewährleistet werden, dass die Fluidtemperatur zum Schutz vor Überdruck und/oder Übertemperatur in einem Fluidleitungssystem und/oder einer Klimaanlage verwendet wird.

Eine weitere vorteilhafte Ausgestaltung des Erfassungssystems zeichnet sich dadurch aus, dass die Sensoreinheit und die Auswerteeinheit in einem gemeinsamen Gehäuse des Erfassungssystems angeordnet sind. So ist es beispielsweise möglich, dass die Auswerteeinheit eine Prozessoreinheit und eine Datenspeichereinheit aufweist, die auf einer Platine angeordnet sind, wobei auf der gleichen Platine außerdem der Temperatursensor der Sensoreinheit angeordnet ist. Außerdem ist es möglich, dass auch der Drucksensor der Sensoreinheit auf der zuvor genannten Platine angeordnet ist. Sofern dies der Fall ist, ist jedoch nur der Abschnitt der Platine mit dem Drucksensor in direktem Kontakt mit dem Fluid der Fluidleitung, wenn die Sensoreinheit an der Fluidleitung befestigt ist. Die Befestigung der Sensoreinheit an der Fluidleitung kann somit durch eine Befestigung des gemeinsamen Gehäuses an der Fluidleitung erreicht werden. In dem zuvor genannten Fall, bei dem der Drucksensor an der gleichen Platine befestigt ist, an der auch der Temperatursensor der Sensoreinheit befestigt ist, wird jedoch durch die beabstandete Anordnung zwischen dem Drucksensor und dem Temperatursensor gewährleistet, dass der Temperatursensor nicht in direkten Kontakt mit dem Fluid aus der Fluidleitung kommen kann. Außerdem ist es bevorzugt vorgesehen, dass der Drucksensor und der Temperatursensor separat ausgebildet sind, insbesondere auch dann, wenn sie auf der gleichen Platine angeordnet sind. Die Verwendung eines Temperatursensors auf einer Platine, der nicht in direkten Kontakt mit dem Fluid aus der Fluidleitung kommt, kann besonders einfach hergestellt werden und bedarf darüber hinaus keiner besonderen Anforderung bezüglich einer Wasserdichtigkeit. Deshalb kann der derart ausgestaltete Temperatursensor auch besonders günstig hergestellt sein, ohne jedoch auf die Messgenauigkeit zu verzichten. So kann der Temperatursensor eine besonders hohe Messgenauigkeit haben. Dies ändert jedoch nichts an der Zeitverzögerung der von dem Temperatursensor erfassten Messtemperatur gegenüber der tatsächlichen Temperatur des Fluids.

Eine weitere vorteilhafte Ausgestaltung des Erfassungssystems zeichnet sich dadurch aus, dass die Sensoreinheit und die Auswerteeinheit in separaten Gehäusen des Erfassungssystems angeordnet sind. Dadurch kann besonders einfach eine duale Herstellung der Sensoreinheit und der Auswerteeinheit gewährleistet werden. So können die Sensoreinheiten beispielsweise in der Praxis separat zu den Auswerteeinheiten hergestellt sein, und nur durch das Koppeln der Sensoreinheit an die Auswerteeinheit das Erfassungssystem erzeugt werden. Die separaten Gehäuse der Sensoreinheit und der Auswerteeinheit können somit eine Signalverbindung als auch eine mechanische Verbindung aufweisen.

Gemäß einem zweiten Aspekt der Erfindung wird die eingangs genannte Aufgabe gelöst durch ein Fluidleitungssystem mit den Merkmalen des Anspruchs 13. Vorgesehen ist also ein Fluidleitungssystem, das einen Fluidleitungsstrang und ein Erfassungssystem aufweist. Der Fluidleitungsstrang weist mindestens einen Abschnitt mit einer Fluidleitung auf. Bei dem Erfassungssystem handelt es sich um ein Erfassungssystem gemäß dem ersten Aspekt der Erfindung und/oder einer der zugehörigen, vorteilhaften Ausgestaltungen. Bezüglich des Erfassungssystems des Fluidleitungssystems wird auf die vorteilhaften Erläuterungen, bevorzugten Merkmale, Effekte und/oder Vorteile in analoger Weise Bezug genommen, wie sie im Zusammenhang mit dem Erfassungssystem gemäß dem ersten Aspekt und/oder einer der zugehörigen, vorteilhaften Ausgestaltungen bereits erläutert worden sind. Die Sensoreinheit des Erfassungssystems des Fluidleitungssystems ist derart an der Fluidleitung des Fluidleitungsstrangs befestigt, sodass ein Fluid aus der Fluidleitung direkt auf den Drucksensor der Sensoreinheit wirkt und der Temperatursensor der Sensoreinheit keinen direkten Kontakt mit dem Fluid aus der Fluidleitung hat. Obwohl der Temperatursensor keinen direkten Kontakt zu dem Fluid aus der Fluidleitung hat, ist es mittels des Erfassungssystems des Fluidleitungssystems möglich, die Fluidtemperatur als eine besonders genaue Schätzung der tatsächlichen Temperatur des Fluids zu ermitteln. Außerdem kann der Fluiddruck besonders schnell erfasst werden. Über das Ausgangssignal des Erfassungssystems des Fluidleitungssystems kann die ermittelte Fluidtemperatur und der Fluiddruck repräsentiert und somit zur Verfügung gestellt werden. Bezüglich des Fluidleitungssystems wird darüber hinaus auf die Vorteile und technischen Effekte verwiesen, die im Zusammenhang mit dem Erfassungssystem gemäß dem ersten Aspekt und/oder einer der zugehörigen, vorteilhaften Ausgestaltungen erläutert worden sind. Denn die Vorteile und technischen Effekte gelten in analoger Weise für das Fluidleitungssystem.

Eine weitere vorteilhafte Ausgestaltung des Fluidleitungssystems zeichnet sich dadurch aus, dass das Fluidleitungssystem ein Fluidleitungssystem einer Klimaanlage ist. Bei einer Klimaanlage besteht oftmals die Anforderung, das Kühlungsfluid und/oder die gesamte Klimaanlage vor einer zu hohen Temperatur und/oder einem zu hohen Druck des Kühlungsfluids zu schützen. Deshalb eignet sich das Fluidleitungssystem besonders vorteilhaft zum Einsatz in einer Klimaanlage.

Gemäß einem dritten Aspekt der Erfindung wird die eingangs genannte Aufgabe gelöst durch eine Klimaanlage mit einem Fluidleitungssystem. Das Fluidleitungssystem wird hierbei durch das Fluidleitungssystem gemäß dem zweiten Aspekt der Erfindung oder der zuvor genannten vorteilhaften Ausgestaltung gebildet. Für die Klimaanlage gelten deshalb analoge Vorteile und technische Effekte.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt eine vorteilhafte Ausgestaltung des Erfassungssystems in einer schematischen Perspektivansicht.
- Figur 2: zeigt das Erfassungssystem aus Figur 1 in einer schematischen Explosionsdarstellung.
- Figur 3: zeigt eine vorteilhafte Ausgestaltung des Fluidleitungssystems in einer schematischen Darstellung.
- Figur 4: zeigt die Schrittgruppe mit den Schritten a) bis e) in einem schematischen Ablaufplan.

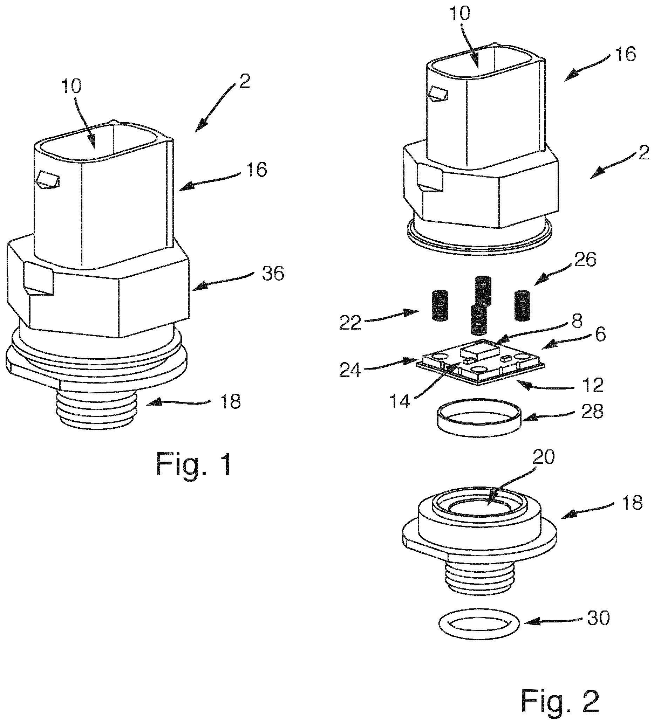

In der Figur 1 ist eine vorteilhafte Ausgestaltung des Erfassungssystems 2 in einer schematischen Perspektivansicht dargestellt. Dieses Erfassungssystem 2 ist nochmals, jedoch in einer Explosionsdarstellung, in der Figur 2 wiedergegeben.

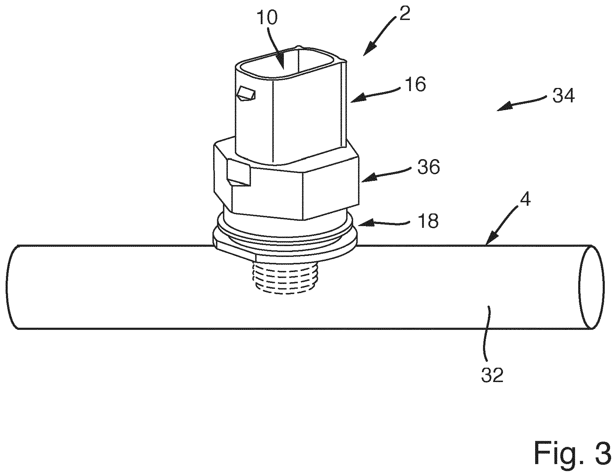

Das Erfassungssystem 2 weist eine Sensoreinheit 6, eine Auswerteeinheit 8 und eine Signalschnittstelle 10 auf. Die Sensoreinheit 6 und die Auswerteeinheit 8 können auf der gleichen Platine 24 befestigt sein. Die Sensoreinheit 6 weist einen Drucksensor 12 und einen Temperatursensor 14 auf. Der Drucksensor 12 ist derart angeordnet, sodass ein Fluid aus einer Fluidleitung 4, wie sie beispielhaft in Figur 3 schematisch dargestellt ist, direkt auf den Drucksensor 12 wirkt, wenn die Sensoreinheit 6 an der Fluidleitung 4 befestigt ist. Die Befestigung der Sensoreinheit 6 kann eine direkte Befestigung oder indirekte Befestigung an der Fluidleitung 4 sein. Wie es beispielhaft aus dem Fluidleitungssystem 34 hervorgeht, dass das Erfassungssystem 2 und die Fluidleitung 4 umfasst, kann es vorgesehen sein, dass die Sensoreinheit 6 nicht direkt an der Fluidleitung 4 befestigt ist. Wie es aus der Zusammenschau der Figuren 1 bis 3 hervorgeht, kann es vorgesehen sein, dass das Erfassungssystem 2 außerdem einen Anschlussstutzen 18 und eine erste Dichtung 28, insbesondere eine O-Ring-Dichtung, aufweist. Dabei kann die Platine 24 im zusammengebauten Zustand des Erfassungssystems 2, wie es beispielhaft in Figur 1 dargestellt ist, derart an einer Rückseite des Anschlussstutzens 18 angeordnet sein, sodass die erste Dichtung 28 die Platine 24 gegenüber dem Anschlussstutzen 18 derart abdichtet, dass ein Fluidkanal 20 des Anschlussstutzens 18 zu der Rückseite der Platine 24 führt. In einer vorteilhaften Ausgestaltung ist der Drucksensor 12 an der Rückseite der Platine 24 befestigt. In diesem Fall kann der Drucksensor 12 derart angeordnet sein, sodass der Drucksensor 12 in unmittelbaren Kontakt mit dem Fluid aus dem Innenraum 32 der Fluidleitung 4 kommt, wenn in dieser Fluidleitung 4 ein Fluid strömt. Denn dieses Fluid kann durch den Fluidkanal 20 des Anschlussstutzens 18 zu dem Drucksensor 12 gelangen und hier entsprechend wirken. Der Fluiddruck des Fluids kann somit unmittelbar von dem Drucksensor 12 erfasst werden. Um das Erfassungssystem 2 an der Fluidleitung zu befestigen, kann eine zweite Dichtung 30, insbesondere eine O-Ring-Dichtung auf der Befestigungsstutzen 18 aufgesetzt sein, um den Befestigungsstutzen 18 anschließen in eine Gewindebohrung der Wandung der Fluidleitung 4 einzuschrauben.

Eine weitere vorteilhaft Ausgestaltung des Erfassungssystems 2 zeichnet sich vorzugsweise dadurch aus, dass der Drucksensor 12 einen vorbestimmten Abschnitt an der Rückseite der Platine 24 bedeckt, sodass der Drucksensor 12 vollständig und allein abdichtend über die erste Dichtung 28 an der Rückseite des Anschlussstutzens 18 befestigt sein kann. Um eine besonders dichte Verbindung zwischen der Rückseite des Anschlussstutzens 18 und der Platine 24 bzw. dem Drucksensor 12 zu erreichen, kann es vorgesehen sein, dass Federn 26 an der von dem Drucksensor 12 abgewandten Vorderseite der Platine 24 angeordnet sind, sodass die Federn 26 beim Zusammenbau des Erfassungssystems 2 auf die Vorderseite der Platine 24 wirken. Die entsprechende Reaktionskraft wird an die erste Dichtung 28 übertragen, sodass mit der ersten Dichtung 28 eine fluiddichte Verbindung zwischen der Rückseite des Anschlussstutzens 18 und der Rückseite der Platine 24 bzw. dem Drucksensor 12 entsteht.

Die Sensoreinheit 6 weist außerdem einen Temperatursensor 14 auf. Der Temperatursensor 14 ist derart angeordnet, dass der Temperatursensor 14 keinen direkten Kontakt mit dem Fluid aus der Fluidleitung 4 hat, wenn die Sensoreinheit 6 direkt oder indirekt an der Fluidleitung 4 befestigt ist. So kann es beispielsweise vorgesehen sein, dass durch die Anordnung des Temperatursensors 14 an der Vorderseite der Platine 24 verhindert wird, dass Fluid bis zu dem Temperatursensor 14 gelangt.

Darüber hinaus weist das Erfassungssystem 2 die Auswerteeinheit 8 auf. Die Auswerteeinheit 8 kann zumindest einen Prozessoreinheit umfassen. Die Auswerteeinheit 8 kann darüber hinaus einen Datenspeicher aufweisen. Die Auswerteeinheit 8 ist vorzugsweise ebenfalls an der Platine 24 befestigt. Wie aus der Figur 2 beispielhaft hervorgeht, kann die Auswerteeinheit 8 ebenfalls an der Vorderseite der Platine 24 angeordnet sein. Dadurch wird ebenfalls verhindert, dass die Auswerteeinheit 8 in Kontakt mit Fluid aus der Fluidleitung 4 kommt.

Der Temperatursensor 14 ist zur Erfassung einer Messtemperatur ausgebildet. Außerdem ist der Temperatursensor 14 zur Erzeugung eines Temperaturmesssignals ausgebildet, das die von dem Temperatursensor 14 erfasste Messtemperatur repräsentiert. Die von dem Temperatursensor 14 erfassbare Messtemperatur ist jedoch die an der Oberseite der Platine 24 bestehende Temperatur. Hier erhöht sich die Temperatur nur zeitverzögert auf einen Wert, der der Temperatur des in der Fluidleitung 4 strömenden Fluids entspricht. Auch wenn der Temperatursensor 14 besonders präzise die Messtemperatur erfassen kann, verbleibt eine Zeitverzögerung, bis die von dem Temperatursensor 14 erfasste Messtemperatur tatsächlich die Temperatur des Fluids aus der Fluidleitung 4 repräsentiert.

In der Praxis besteht oftmals die Forderung, dass die Fluidtemperatur zumindest im Wesentlichen ohne Verzögerung erfasst werden muss, um negative Auswirkungen, wie beispielsweise eine Überhitzung und/oder ein Überdruck in einem System zu verhindern, mit dem die Fluidleitung 4 gekoppelt ist.

Vor diesem Hintergrund ist es deshalb vorgesehen, dass die von dem Temperatursensor 14 erfasste Messtemperatur dazu verwendet wird, um eine basierend auf dem Fluiddruck abgeschätzte Basistemperatur derart zu korrigieren, dass im Ergebnis eine Fluidtemperatur ermittelbar ist, die eine genauere, qualitative Angabe der tatsächlichen Temperatur des Fluids wiedergibt und zugleich möglichst ohne zeitliche Verzögerung bereitgestellt wird.

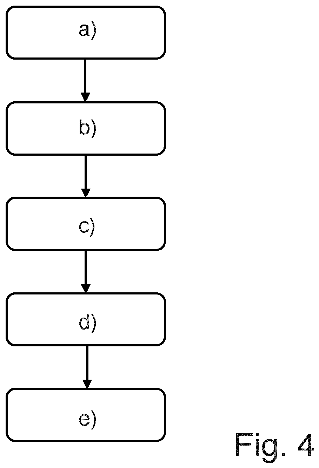

Es ist deshalb vorgesehen, dass die Auswerteeinheit 8 konfiguriert ist, eine Schrittgruppe mit den in Figur 4 beispielhaft und schematisch dargestellten Schritten a) bis e) wiederholt auszuführen. Die Schrittgruppe umfasst also die Schritte a) bis e), die nacheinander, wie es beispielhaft in Figur 4 dargestellt ist, ausgeführt werden. Die Schrittgruppe wird wiederholt von der Auswerteeinheit ausgeführt.

So ist die Auswerteeinheit 8 konfiguriert, in dem Schritt a) eine Basistemperatur als eine Schätzung für die Temperatur des Fluids basierend auf dem von dem Drucksensor 12 gemessenen Fluiddruck zu ermitteln. In einer einfachen Ausgestaltung kann hierzu ein Umrechnungsfaktor verwendet werden, der durch Multiplikation mit dem Fluiddruck die Berechnung der Basistemperatur ermöglicht. Mit anderen Worten kann die Auswerteeinheit 8 konfiguriert sein, die Basistemperatur in Schritt a) durch Multiplikation des Fluiddrucks mit dem vorbestimmten Umrechnungsfaktor zu ermitteln. Der Fluiddruck ist zumindest im Wesentlichen ohne Zeitverzögerung mittels des Drucksensors 12 erfassbar. Die Ermittlung der Basistemperatur basierend auf dem Fluiddruck kann in Schritt a) mittels der Auswerteeinheit 8 ebenfalls besonders schnell ausgeführt werden. Deshalb kann die Basistemperatur auch zumindest im Wesentlichen ohne Zeitverzögerung ermittelt werden. Die Basistemperatur kann beispielhaft eine grobe Abschätzung der Temperatur des Fluids repräsentieren. Sie bedarf deshalb einer Korrektur, um die tatsächliche Temperatur des Fluids in der Fluidleitung 4 besser abschätzen zu können.

Es ist deshalb vorgesehen, dass die Auswerteeinheit 8 konfiguriert ist, in Schritt b) die Fluidtemperatur basierend auf der Basistemperatur und einem Korrekturwert zu ermitteln. Der Korrekturwert ist bei der ersten Ausführung des Schritts b) durch einen vorbestimmten Wert bestimmt. Bei jeder weiteren Ausführung des Schritts b) wird der Korrekturwert durch den aktualisierten Korrekturwert bestimmt, der in der vorangegangenen Schrittgruppe in Schritt e) ermittelt wurde. Dadurch kann eine rekursive Verbesserung der Ermittlung der Fluidtemperatur erreicht werden. Dies erlaubt eine besonders präzise Ermittlung der Fluidtemperatur, die nach mehreren Ausführungen der Schrittgruppe mit den Schritten a) bis e) zu einer Fluidtemperatur führt, die vorzugsweise nur eine sehr kleine Differenz zu der tatsächlichen Temperatur des Fluids in der Fluidleitung 4 hat.

Von der Auswerteeinheit 8 ist eine Übertragungsfunktion gespeichert, die eine funktionale Beziehung zwischen einer Temperatur am Temperatursensor 14 und einer Temperatur des Fluids in der Fluidleitung 4 repräsentiert. Die Übertragungsfunktion basiert somit auf der Erkenntnis, dass sich die Temperatur am Temperatursensor 14 zeitverzögert im Verhältnis zu der Temperatur des Fluids in der Fluidleitung 4 verhält. Die Übertragungsfunktion kann beispielsweise ein Zeitverzögerungsglied, insbesondere ein Zeitverzögerungsglied erster Ordnung mit einer vorbestimmten Zeitkonstante, sein. Die Zeitkonstante kann beispielsweise 20 Sekunden sein. Somit kann es beispielsweise 20 Sekunden dauern, bis die Temperatur am Temperatursensor 14 zumindest im Wesentlichen der Temperatur des Fluids entspricht. Die Übertragungsfunktion kann dazu verwendet werden, um abzuschätzen, welche Temperatur am Temperatursensor 14 anliegen müsste, wenn die zuvor in Schritt b) ermittelte Fluidtemperatur der Temperatur des Fluids entsprechen würde.

Es ist deshalb vorgesehen, dass die Auswerteeinheit 8 konfiguriert ist, in Schritt c) eine Sensortemperatur als eine Schätzung für die Temperatur am Temperatursensor 14 mittels der Übertragungsfunktion und der Fluidtemperatur, die zuvor in Schritt b) ermittelt wurde, als Eingangsgröße für die Übertragungsfunktion zu ermitteln. Diese Sensortemperatur ist jedoch nur eine Abschätzung für die Temperatur am Temperatursensor 14. Denn sie wurde mit der ebenfalls abgeschätzten Fluidtemperatur als Eingangsgröße für die Übertragungsfunktion ermittelt. Sofern zwischen der Fluidtemperatur und der tatsächlichen Temperatur des Fluids in der Fluidleitung 4 ein Fehler besteht, wird auch die Sensortemperatur eine fehlerbehaftete Schätzung für die Temperatur am Temperatursensor 14 sein.

Es ist deshalb vorgesehen, dass die Auswerteeinheit 8 konfiguriert ist, in Schritt d) eine Temperaturdifferenz zwischen der Messtemperatur, die mittels des Temperatursensors 14 erfasst wurde, und der zuvor in Schritt c) ermittelten Sensortemperatur zu ermitteln. Die Temperaturdifferenz gibt somit zumindest indirekt an, wie genau die in Schritt b) ermittelte Fluidtemperatur die tatsächliche Temperatur des Fluids in der Fluidleitung 4 repräsentiert. Umso kleiner die Temperaturdifferenz ist, umso besser ist die Abschätzung der tatsächlichen Temperatur des Fluids in der Fluidleitung 4 durch die in Schritt b) ermittelte Fluidtemperatur. Dennoch kann es in der Praxis zu Abweichungen kommen, die in einer entsprechenden Temperaturdifferenz resultieren.

Deshalb ist es vorgesehen, dass die Auswerteeinheit 8 konfiguriert ist, in Schritt d) den Korrekturwert als aktualisierten Korrekturwert für die nachfolgende Schrittgruppe basierend auf der aktuellen Temperaturdifferenz, die in Schritt d) zuvor ermittelt wurde, oder einen Mittelwert von mehreren Temperaturdifferenzen, die in Schritt d) der aktuellen Schrittgruppe und mindestens einer vorangegangenen, ausgeführten Schrittgruppe ermittelt worden sind, zu aktualisieren. Dieser in Schritt e) aktualisierte Korrekturwert kann sodann für den Schritt b) der nachfolgenden Schrittgruppe als Korrekturwert verwendet werden, um basierend auf diesem Korrekturwert und der Basistemperatur die Fluidtemperatur zu ermitteln. Als besonders vorteilhaft hat es sich herausgestellt, wenn die Auswerteeinheit 8 konfiguriert ist, den aktualisierten Korrekturwert in Schritt e) durch Addition des alten Korrekturwerts, der in Schritt e) der vorangegangenen Schrittgruppe ermittelt wurde mit der gewichteten Temperaturdifferenz aus Schritt d) der aktuellen Schrittgruppe zu ermitteln. Die Gewichtung kann durch einen Gewichtungsfaktor erfolgen, der beispielsweise 0,25 ist. Der Gewichtungsfaktor kann vorzugsweise im Bereich zwischen 0,01 und 0,4 sein. Dadurch wird gewährleistet, dass eine robuste und nicht zu sensible Anpassung des Korrekturfaktors erfolgt.

Der in Schritt e) aktualisierte Korrekturwert wird somit in der nachfolgenden Schrittgruppe in Schritt b) beispielsweise derart verwendet, dass der aktualisierte Korrekturwert zu der Basistemperatur addiert wird oder mit dieser multipliziert wird, um dadurch die Fluidtemperatur zu ermitteln. Die Auswerteeinheit 8 kann hierzu entsprechend konfiguriert sein.

Wie aus den Figuren 1 und 2 beispielhaft zu entnehmen ist, weist das Erfassungssystem 2 vorzugsweise einen Anschlussstecker 16 auf. Der Anschlussstecker 16 kann zusammen mit dem Anschlussstutzen 18 ein Gehäuse 36 für die Sensoreinheit 6 und die Auswerteeinheit 8 bilden. Dieses Gehäuse 36 kann auch als gemeinsames Gehäuse 36 bezeichnet sein. Von dem Gehäuse 36 kann ein Innenraum 22 gebildet sein, in dem die Platine 24 angeordnet ist. Da die Auswerteeinheit 8 und die Sensoreinheit 6 bevorzugt an der Platine 24 befestigt sind, können die Platine 24, die Auswerteeinheit 8 und die Sensoreinheit 6 gemeinsam in dem Innenraum 22 des gemeinsamen Gehäuses 36 angeordnet sein.

Wie bereits zuvor erwähnt, ist in der Figur 3 eine vorteilhafte Ausgestaltung des Fluidleitungssystems 34 dargestellt, das einen Fluidstrang 38 mit der Fluidleitung 4 aufweist. Außerdem weist das Fluidleitungssystem 34 ein Erfassungssystem 2 auf, wie es beispielhaft zuvor erläutert worden ist. Das in Figur 3 dargestellte Fluidleitungssystem 34 kann einen Teil einer Klimaanlage bilden.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Erfassungssystem (2) für eine Fluidleitung (4), aufweisend
eine Sensoreinheit (6),
eine Auswerteeinheit (8), und
eine Signalschnittstelle (10),
wobei die Sensoreinheit (6) einen Drucksensor (12) und einen Temperatursensor (14) aufweist,
wobei die Sensoreinheit (6) ausgebildet ist, um an der Fluidleitung (4) befestigt zu werden,
wobei der Drucksensor (12) derart an oder in der Sensoreinheit (6) angeordnet ist, sodass ein Fluid aus der Fluidleitung (4) direkt auf den Drucksensor (12) wirkt, wenn die Sensoreinheit (6) an der Fluidleitung (4) befestigt ist,
wobei der Temperatursensor (14) in der Sensoreinheit (6) derart angeordnet ist, sodass der Temperatursensor (14) keinen direkten Kontakt mit dem Fluid aus der Fluidleitung (4) hat, wenn die Sensoreinheit (6) an der Fluidleitung (4) befestigt ist,
wobei der Temperatursensor (14) zur Erzeugung eines Temperaturmesssignals ausgebildet ist, das eine von dem Temperatursensor (14) erfasste Messtemperatur repräsentiert,
wobei der Temperatursensor (14) direkt oder indirekt mit der Auswerteeinheit (8) gekoppelt ist, um das Temperaturmesssignal an die Auswerteeinheit (8) zu übertragen,
wobei der Drucksensor (12) zur Erzeugung eines Drucksignals ausgebildet ist, das einen von dem Drucksensor (12) erfassten Fluiddruck des Fluids repräsentiert,
wobei der Drucksensor (12) direkt oder indirekt mit der Auswerteeinheit (8) gekoppelt ist, um das Drucksignal an die Auswerteeinheit (8) zu übertragen,
wobei eine Übertragungsfunktion, die eine funktionale Beziehung zwischen einer Temperatur am Temperatursensor (14) und der Temperatur des Fluids repräsentiert, von der Auswerteeinheit (8) gespeichert ist,
**dadurch gekennzeichnet, dass**
die Auswerteeinheit (8) konfiguriert ist, eine Schrittgruppe mit zumindest den folgenden Schritten a) bis e) wiederholt auszuführen:
a) Ermitteln einer Basistemperatur als eine Schätzung für die Temperatur des Fluids basierend auf dem Fluiddruck;
b) Ermitteln einer Fluidtemperatur basierend auf der Basistemperatur und einem Korrekturwert, der allein bei der ersten Ausführung der Schrittgruppe einen vorbestimmten Wert aufweist und bei jeder weiteren Ausführung der Schrittgruppe von einem zuletzt aktualisierten Korrekturwert bestimmt ist;
c) Ermitteln einer Sensortemperatur als eine Schätzung für die Temperatur am Temperatursensor (14) mittels der Übertragungsfunktion und der Fluidtemperatur als Eingangsgröße für die Übertragungsfunktion;
d) Ermitteln einer Temperaturdifferenz zwischen der Messtemperatur und der Sensortemperatur; und
e) Aktualisieren des Korrekturwerts als aktualisierter Korrekturwert für die nachfolgende Schrittgruppe basierend auf der aktuellen Temperaturdifferenz oder einem Mittelwert von mehreren Temperaturdifferenzen, die in Schritt d) der aktuellen Schrittgruppe und mindestens einer vorangegangenen Schrittgruppe ermittelt worden sind;
wobei das Erfassungssystem (2) ausgebildet ist, ein Ausgangssignal zu erzeugen und über die Signalschnittstelle (10) zu übertragen, das die jeweils zuletzt in Schritt b) ermittelte Fluidtemperatur repräsentiert.

2. Erfassungssystem (2) nach dem vorhergehenden Anspruch, **dadurch gekennzeichnet, dass** die Übertragungsfunktion ein Zeitverzögerungsglied, insbesondere ein Zeitverzögerungsglied erster Ordnung mit einer vorbestimmten Zeitkonstante , repräsentiert, wobei die Zeitkonstante einer Dauer entspricht, bis die Temperatur am Temperatursensor (14) zumindest im Wesentlichen der Temperatur des Fluids entspricht.

3. Erfassungssystem (2) nach dem vorhergehenden Anspruch, **dadurch gekennzeichnet, dass** die Zeitkonstante eine Zeit zwischen 10 Sekunden und 40 Sekunden ist.

4. Erfassungssystem (2) nach Anspruch 2, **dadurch gekennzeichnet, dass** die Auswerteeinheit (8) konfiguriert ist, die Zeitkonstante basierend auf dem erfassten Fluiddruck, der Basistemperatur oder der Fluidtemperatur zu ermitteln.

5. Erfassungssystem (2) nach Anspruch 2, **dadurch gekennzeichnet, dass** die Auswerteinheit (8) konfiguriert ist, die Zeitkonstante basierend auf dem erfassten Fluiddruck, der Basistemperatur oder der Fluidtemperatur aus einer ersten Referenztabelle auszulesen, die von der Auswerteinheit (8) gespeichert ist.

6. Erfassungssystem (2) nach einem der vorhergehenden Ansprüche, **dadurch gekennzeichnet, dass** Auswerteeinheit (8) konfiguriert ist, die Basistemperatur in Schritt a) jeweils durch Multiplikation des Werts des Fluiddrucks mit einem vorbestimmten Umrechnungsfaktor oder mittels einer vorbestimmten Umrechnungsfunktion, bei der der jeweilige Fluiddruck als Variable berücksichtigt ist, zu ermitteln.

7. Erfassungssystem (2) nach einem der vorhergehenden Ansprüche, **dadurch gekennzeichnet, dass** die Auswerteinheit (8) konfiguriert ist, die Basistemperatur mittels einer zweiten Referenztabelle und basierend auf dem erfassten Fluiddruck zu ermitteln, wobei die zweite Referenztabelle eine Vielzahl von Basistemperaturen für zugeordnete Fluiddrücke abbildet, und wobei die zweite Referenztabelle von der Auswerteinheit (8) gespeichert ist.

8. Erfassungssystem (2) nach einem der vorhergehenden Ansprüche, **dadurch gekennzeichnet, dass** die Auswerteeinheit (8) konfiguriert ist, den aktualisierten Korrekturwert in Schritt e) durch Addition des alten Korrekturwerts, der in Schritt e) der vorangegangenen Schrittgruppe ermittelt wurde, mit der gewichteten Temperaturdifferenz zu ermitteln.

9. Erfassungssystem (2) nach einem der vorhergehenden Ansprüche, **dadurch gekennzeichnet, dass** die Auswerteeinheit (8) konfiguriert ist, die Fluidtemperatur in Schritt b) durch Multiplikation der Basistemperatur mit dem Korrekturwert zu ermitteln.

10. Erfassungssystem (2) nach einem der vorhergehenden Ansprüche 1 bis 8, **dadurch gekennzeichnet, dass** die Auswerteeinheit (8) konfiguriert ist, die Fluidtemperatur in Schritt b) durch Addition des Korrekturwerts zu der Basistemperatur zu ermitteln.

11. Erfassungssystem (2) nach dem vorhergehenden Anspruch, **dadurch gekennzeichnet, dass** die Sensoreinheit (6) und die Auswerteeinheit (8) in einem gemeinsamen Gehäuse (36) des Erfassungssystems (2) angeordnet sind.

12. Erfassungssystem (2) nach einem der vorhergehenden Ansprüche 1 bis 10, **dadurch gekennzeichnet, dass** die Sensoreinheit (6) und die Auswerteeinheit (8) in separaten Gehäusen des Erfassungssystems (2) angeordnet sind.

13. Fluidleitungssystem (34), aufweisend:
einen Fluidleitungsstrang (38), der mindestens einen Abschnitt mit einer Fluidleitung (4) aufweist, und
ein Erfassungssystem (2) nach einem der vorhergehenden Ansprüche,
wobei die Sensoreinheit (6) des Erfassungssystems (2) derart an der Fluidleitung (4) des Fluidleitungsstrangs (38) befestigt ist, sodass ein Fluid aus der Fluidleitung (4) direkt auf den Drucksensor (12) der Sensoreinheit (6) wirkt und der Temperatursensor (14) keinen direkten Kontakt mit dem Fluid aus der Fluidleitung (4) hat.

14. Fluidleitungssystem (34) nach dem vorhergehenden Anspruch, **dadurch gekennzeichnet, dass** das Fluidleitungssystem (34) ein Fluidleitungssystem einer Klimaanlage ist.

15. Klimaanlage mit einem Fluidleitungssystem (34) nach Anspruch 13.

## Claims

1. Detection system (2) for a fluid line (4), having
a sensor unit (6),
an evaluation unit (8), and
a signal interface (10),
wherein the sensor unit (6) has a pressure sensor (12) and a temperature sensor (14),
wherein the sensor unit (6) is designed to be fastened on the fluid line (4),
wherein the pressure sensor (12) is arranged on or in the sensor unit (6) in such a way that a fluid from the fluid line (4) acts directly on the pressure sensor (12) when the sensor unit (6) is fastened on the fluid line (4),
wherein the temperature sensor (14) is arranged in the sensor unit (6) in such a way that the temperature sensor (14) is not in direct contact with the fluid from the fluid line (4) when the sensor unit (6) is fastened on the fluid line (4),
wherein the temperature sensor (14) is designed for generating a temperature measuring signal that represents a measuring temperature detected by the temperature sensor (14),
wherein the temperature sensor (14) is directly or indirectly coupled to the evaluation unit (8) in order to transmit the temperature measuring signal to the evaluation unit (8),
wherein the pressure sensor (12) is designed for generating a pressure signal that represents a fluid pressure of the fluid detected by the pressure sensor (12),
wherein the pressure sensor (12) is directly or indirectly coupled to the evaluation unit (8) in order to transmit the pressure signal to the evaluation unit (8),
wherein a transmission function that represents a functional relationship between a temperature at the temperature sensor (14) and the temperature of the fluid is stored by the evaluation unit (8),
**characterized in that** the evaluation unit (8) is configured to repeatedly perform a group of steps comprising at least the following steps a) to e):
a) ascertaining a base temperature as an estimate of the temperature of the fluid on the basis of the fluid pressure;
b) ascertaining a fluid temperature on the basis of the base temperature and a correction value, which has a predetermined value only in the first performance of the group of steps and is determined by a last-updated correction value in every other performance of the group of steps;
c) ascertaining a sensor temperature as an estimate of the temperature at the temperature sensor (14) by means of the transmission function and the fluid temperature as an input variable for the transmission function;
d) ascertaining a temperature difference between the measuring temperature and the sensor temperature; and
e) updating the correction value as an updated correction value for the subsequent group of steps on the basis of the current temperature difference or an average value of a number of temperature differences that have been ascertained in step d) of the current group of steps and at least one previous group of steps;
wherein the detection system (2) is designed to generate an output signal that represents the fluid temperature ascertained last in each case in step b) and transmitted to the signal interface (10).

2. Detection system (2) according to the preceding claim, **characterized in that** the transmission function represents a time delay element, in particular a first-order time delay element, with a predetermined time constant, wherein the time constant corresponds to the time it takes until the temperature at the temperature sensor (14) corresponds at least substantially to the temperature of the fluid.

3. Detection system (2) according to the preceding claim, **characterized in that** the time constant is a time between 10 seconds and 40 seconds.

4. Detection system (2) according to Claim 2, **characterized in that** the evaluation unit (8) is configured to ascertain the time constant on the basis of the detected fluid pressure, the base temperature or the fluid temperature.

5. Detection system (2) according to Claim 2, **characterized in that** the evaluation unit (8) is configured to read out the time constant on the basis of the detected fluid pressure, the base temperature or the fluid temperature from a first reference table, which is stored by the evaluation unit (8).

6. Detection system (2) according to one of the preceding claims, **characterized in that** the evaluation unit (8) is configured to ascertain the base temperature in step a) in each case by multiplication of the value of the fluid pressure by a predetermined conversion factor or by means of a predetermined conversion function in which the respective fluid pressure is taken into account as a variable.

7. Detection system (2) according to one of the preceding claims, **characterized in that** the evaluation unit (8) is configured to ascertain the base temperature by means of a second reference table and on the basis of the detected fluid pressure, wherein the second reference table shows a multiplicity of base temperatures for assigned fluid pressures, and wherein the second reference table is stored by the evaluation unit (8).

8. Detection system (2) according to one of the preceding claims, **characterized in that** the evaluation unit (8) is configured to ascertain the updated correction value in step e) by addition of the old correction value that was ascertained in step e) of the previous group of steps to the weighted temperature difference.

9. Detection system (2) according to one of the preceding claims, **characterized in that** the evaluation unit (8) is configured to ascertain the fluid temperature in step b) by multiplication of the base temperature by the correction value.

10. Detection system (2) according to one of the preceding Claims 1 to 8, **characterized in that** the evaluation unit (8) is configured to ascertain the fluid temperature in step b) by addition of the correction value to the base temperature.

11. Detection system (2) according to the preceding claim, **characterized in that** the sensor unit (6) and the evaluation unit (8) are arranged in a common housing (36) of the detection system (2).

12. Detection system (2) according to one of the preceding Claims 1 to 10, **characterized in that** the sensor unit (6) and the evaluation unit (8) are arranged in separate housings of the detection system (2).

13. Fluid line system (34), having:
a fluid line run (38), which has at least one section with a fluid line (4), and
a detection system (2) according to one of the preceding claims,
wherein the sensor unit (6) of the detection system (2) is fastened on the fluid line (4) of the fluid line run (38) in such a way that a fluid from the fluid line (4) acts directly on the pressure sensor (12) of the sensor unit (6) and the temperature sensor (14) is not in direct contact with the fluid from the fluid line (4).

14. Fluid line system (34) according to the preceding claim, **characterized in that** the fluid line system (34) is a fluid line system of an air conditioning system.

15. Air conditioning system with a fluid line system (34) according to Claim 13.

## Revendications

1. Système de détection (2) destiné à une conduite de fluide (4), ledit système de détection comportant
une unité de capteurs (6),
une unité d'évaluation (8) et
une interface de signal (10),
l'unité de capteurs (6) comportant un capteur de pression (12) et un capteur de température (14), l'unité de capteurs (6) étant conçue pour être fixée à la conduite de fluide (4),
le capteur de pression (12) étant disposé sur ou dans l'unité de capteurs (6) de sorte qu'un fluide provenant de la conduite de fluide (4) agisse directement sur le capteur de pression (12) lorsque l'unité de capteurs (6) est fixée à la conduite de fluide (4),
le capteur de température (14) étant disposé dans l'unité de capteurs (6) de telle sorte que le capteur de température (14) ne soit pas en contact direct avec le fluide provenant de la conduite de fluide (4) lorsque l'unité de capteurs (6) est fixée à la conduite de fluide (4),
le capteur de température (14) étant conçu pour générer un signal de mesure de température qui représente une température de mesure détectée par le capteur de température (14),
le capteur de température (14) étant couplé directement ou indirectement à l'unité d'évaluation (8) pour transmettre le signal de mesure de température à l'unité d'évaluation (8),
le capteur de pression (12) étant conçu pour générer un signal de pression qui représente une pression du fluide qui est détectée par le capteur de pression (12) ,
le capteur de pression (12) étant couplé directement ou indirectement à l'unité d'évaluation (8) pour transmettre le signal de pression à l'unité d'évaluation (8),
une fonction de transfert, qui représente une relation fonctionnelle entre une température au niveau du capteur de température (14) et la température du fluide, étant mémorisée par l'unité d'évaluation (8), **caractérisé en ce que**
l'unité d'évaluation (8) est configurée pour exécuter de façon répétée un groupe d'étapes comprenant au moins les étapes suivantes a) à e) :
a) déterminer une température de base comme estimation de la température du fluide sur la base de la pression du fluide ;
b) déterminer une température de fluide sur la base de la température de base et d'une valeur de correction qui n'a une valeur prédéterminée que lorsque le groupe d'étapes est exécuté pour la première fois et qui est déterminée par une dernière valeur de correction actualisée pour chaque exécution ultérieure du groupe d'étapes ;
c) déterminer une température de capteur comme estimation de la température au niveau du capteur de température (14) à l'aide de la fonction de transfert et de la température du fluide comme grandeur d'entrée de la fonction de transfert ;
d) déterminer une différence de température entre la température de mesure et la température de capteur ; et
e) actualiser la valeur de correction comme valeur de correction actualisée pour le groupe d'étapes suivant sur la base de la différence de température actuelle ou d'une valeur moyenne de plusieurs différences de température qui ont été déterminées à l'étape d) du groupe d'étapes actuel et d'au moins un groupe d'étapes précédent ;
le système de détection (2) étant conçu pour générer un signal de sortie et pour le transmettre par le biais de l'interface de signal (10), lequel signal de sortie représente la dernière température de fluide déterminée à l'étape b).

2. Système de détection (2) selon la revendication précédente, **caractérisé en ce que** la fonction de transfert représente un élément à retard, notamment un élément à retard de premier ordre ayant une constante de temps prédéterminée, la constante de temps correspondant à une durée jusqu'à ce que la température au niveau du capteur de température (14) corresponde au moins sensiblement à la température du fluide.

3. Système de détection (2) selon la revendication précédente, **caractérisé en ce que** la constante de temps est un temps compris entre 10 secondes et 40 secondes.

4. Système de détection (2) selon la revendication 2, **caractérisé en ce que** l'unité d'évaluation (8) est configurée pour déterminer la constante de temps sur la base de la pression de fluide détectée, de la température de base ou de la température de fluide.

5. Système de détection (2) selon la revendication 2, **caractérisé en ce que** l'unité d'évaluation (8) est configurée pour lire la constante de temps sur la base de la pression de fluide détectée, de la température de base ou de la température de fluide dans une première table de référence qui est mémorisée par l'unité d'évaluation (8).

6. Système de détection (2) selon l'une des revendications précédentes, **caractérisé en ce que** l'unité d'évaluation (8) est configurée pour déterminer la température de base à l'étape a) à chaque fois en multipliant la valeur de la pression de fluide par un facteur de conversion prédéterminé ou à l'aide d'une fonction de conversion prédéterminée, dans laquelle la pression de fluide respective est considérée comme une grandeur.

7. Système de détection (2) selon l'une des revendications précédentes, **caractérisé en ce que** l'unité d'évaluation (8) est configurée pour déterminer la température de base à l'aide d'une deuxième table de référence et sur la base de la pression de fluide détectée, la deuxième table de référence représentant un grand nombre de températures de base pour des pressions de fluide associées, et la deuxième table de référence étant mémorisée par l'unité d'évaluation (8).

8. Système de détection (2) selon l'une des revendications précédentes, **caractérisé en ce que** l'unité d'évaluation (8) est configurée pour déterminer la valeur de correction actualisée à l'étape e) en ajoutant l'ancienne valeur de correction, qui a été déterminée à l'étape e) du groupe d'étapes précédent, à la différence de température pondérée.

9. Système de détection (2) selon l'une des revendications précédentes, **caractérisé en ce que** l'unité d'évaluation (8) est configurée pour déterminer la température de fluide à l'étape b) en multipliant la température de base par la valeur de correction.

10. Système de détection (2) selon l'une des revendications précédentes 1 à 8, **caractérisé en ce que** l'unité d'évaluation (8) est configurée pour déterminer la température de fluide à l'étape b) en ajoutant la valeur de correction à la température de base.

11. Système de détection (2) selon la revendication précédente, **caractérisé en ce que** l'unité de capteurs (6) et l'unité d'évaluation (8) sont disposées dans un boîtier commun (36) du système de détection (2).

12. Système de détection (2) selon l'une des revendications précédentes 1 à 10, **caractérisé en ce que** l'unité de capteurs (6) et l'unité d'évaluation (8) sont disposées dans des boîtiers séparés du système de détection (2).

13. Système de conduite de fluide (34) comportant :
une branche de conduite de fluide (38) qui comporte au moins une portion pourvue d'une conduite de fluide (4), et
un système de détection (2) selon l'une des revendications précédentes,
l'unité de capteurs (6) du système de détection (2) étant fixée à la conduite de fluide (4) de la branche de conduite de fluide (38) de sorte qu'un fluide provenant de la conduite de fluide (4) agisse directement sur le capteur de pression (12) de l'unité de capteurs (6) et que le capteur de température (14) ne soit pas en contact direct avec le fluide provenant de la conduite de fluide (4).

14. Système de conduite de fluide (34) selon la revendication précédente, **caractérisé en ce que** le système de conduite de fluide (34) est un système de conduite de fluide d'une installation de climatisation.

15. Installation de climatisation comprenant un système de conduite de fluide (34) selon la revendication 13.
